**Europäisches Patentamt**

**European Patent Office**

**Office européen des brevets**

(19)

(11) Numéro de publication : **0 161 233 B1**

# (12) FASCICULE DE BREVET EUROPÉEN

(45) Date de publication du fascicule du brevet :
21.10.87

(51) Int. Cl.⁴ : **E 04 F 13/18, E 04 F 15/10**

(21) Numéro de dépôt : **85870046.1**

(22) Date de dépôt : **22.03.85**

(54) **Panneau décoratif.**

(30) Priorité : **26.03.84 BE 212630**

(43) Date de publication de la demande :
**13.11.85 Bulletin 85/46**

(45) Mention de la délivrance du brevet :
**21.10.87 Bulletin 87/43**

(84) Etats contractants désignés :
**AT CH DE FR GB IT LI LU NL SE**

(56) Documents cités :
DE-A- 2 604 704
DE-A- 3 117 605
FR-A- 1 511 292
FR-A- 2 467 938
GB-A- 1 259 335
US-A- 2 737 693
US-A- 2 760 895
US-A- 3 988 187

(73) Titulaire : **Rousseau, Gilbert O.**
**rue de Villers 6**
**B-4280 Hannut (BE)**

(72) Inventeur : **Rousseau, Gilbert O.**
**rue de Villers 6**
**B-4280 Hannut (BE)**

(74) Mandataire : **Vigneron, Jean**
**Cabinet VIGNERON 30 avenue Eugène Godaux**
**B-1150 Bruxelles (BE)**

Jouve, 18, rue St-Denis, 75001 Paris, France

## Description

La présente invention a pour objet un panneau décoratif, pour assemblage à plat joint à rainure et languette, constitué d'un support rigide présentant au moins une rainure et au moins une languette, ménagées le long de deux bords parallèles du support, et d'une couche de revêtement décorative associée à une des deux grandes faces dudit support de manière à couvrir la totalité de la surface de cette face (DE-A-3 117 605).

Les panneaux du type susdit, qui existent actuellement pour la décoration des murs, plafonds, etc...., sont prévus pour être assemblés soit à joints ouverts, soit bord à bord. Dans ce dernier cas, les panneaux connus présentent l'inconvénient de laisser apparaître, malgré tout le soin que l'on peut apporter à l'assemblage des panneaux, le joint entre chaque panneau, ce qui nuit à l'aspect esthétique du revêtement obtenu.

Le US-A-2 760 895 concerne un élément de couverture de sol comprenant un support rigide et des couches associées au support faisant saillie par rapport aux quatre bords du support.

L'invention a pour but de remédier à cet inconvénient et de procurer un panneau qui permet d'obtenir, par assemblage bord à bord, un revêtement dont les joints sont invisibles et ce, même si l'assemblage des panneaux n'est pas effectué avec tout le soin requis.

A cet effet, suivant l'invention, la couche de revêtement décorative est réalisée en matériau déformable par compression et fait saillie le long d'au moins un des deux bords parallèles précités du support d'une dimension constante, les rainures et languette de ce dernier étant agencées pour permettre, lors de l'assemblage de deux panneaux, la compression de la partie de la couche de revêtement décoratif disposée en saillie afin de fermer le joint entre ces deux panneaux.

Suivant une forme de réalisation avantageuse de l'invention, la couche de revêtement décoratif fait saillie, par rapport à la face susdite du panneau, le long des deux bords parallèles précités du panneau, les dimensions des parties de la couche de revêtement en saillie, prises perpendiculairement auxdits bords, étant sensiblement égales.

Suivant un mode de réalisation avantageux de l'invention, la face du support, opposée à la face sur laquelle est appliquée la couche de revêtement décorative, est couverte d'une couche de matière de même nature que celle qui constitue la couche de revêtement décorative.

Suivant une forme de réalisation particulièrement avantageuse de l'invention, la couche de revêtement décorative a sa surface apparente qui imite un tissu dont les fils de chaîne sont sensiblement parallèles aux deux bords précités du panneau.

D'autres détails et particularités de l'invention ressortiront de la description des dessins annexés au présent mémoire et qui illustrent, à titre d'exemples non limitatifs, des formes de réalisation particulières du panneau suivant l'invention.

La figure 1 est une vue en coupe, avec brisure partielle, d'un panneau suivant l'invention.

La figure 2 est une vue en coupe, avec brisures partielles d'un assemblage de deux panneaux illustrés à la figure 1.

Les figures 3 et 4 sont des vues analogues aux figures 1 et 2 et montrent une variante du panneau représenté auxdites figures 1 et 2.

Les figures 5 et 6 sont des vues analogues aux figures précédentes et illustrent une forme de réalisation préférée du panneau suivant l'invention, ainsi que l'assemblage de deux de ces panneaux.

Dans les différentes figures, les mêmes notations de référence désignent des éléments identiques ou analogues.

Suivant l'invention et comme montré aux dessins, le panneau décoratif 1, pour assemblage à plat joint à rainure et languette, est constitué d'un support rigide 2 représentant au moins une rainure 3 et au moins une languette 4, ménagées le long de deux bords parallèles 5 et 6 du panneau, et d'une couche de revêtement décorative 7 associée à une des deux grandes faces 8 et 9 du support 2.

La couche de revêtement décorative 7 du panneau est réalisée en un matériau déformable par compression et est associée à la face 8 du support rigide 2 de manière à couvrir la totalité de la surface de cette face 8 et à faire saillie régulièrement par rapport à cette dernière le long d'au moins un des deux bords 5 et 6 du support. Les rainure 3 et languette 4 présentées par ce support 2 sont agencées pour permettre, lors de l'assemblage de deux panneaux 1 et 1', d'exercer une pression sur le panneau 1' à fixer, dirigée vers le panneau 1 déjà fixé et suivant la flèche 10, pour comprimer la partie 11 de la couche de revêtement 7, disposée en saillie par rapport au support 2, pour fermer le joint 12 entre ces deux panneaux et le rendre invisible, même si le bord 6 du support du panneau 1' n'est pas tout à fait parallèle au bord 5 du panneau 1.

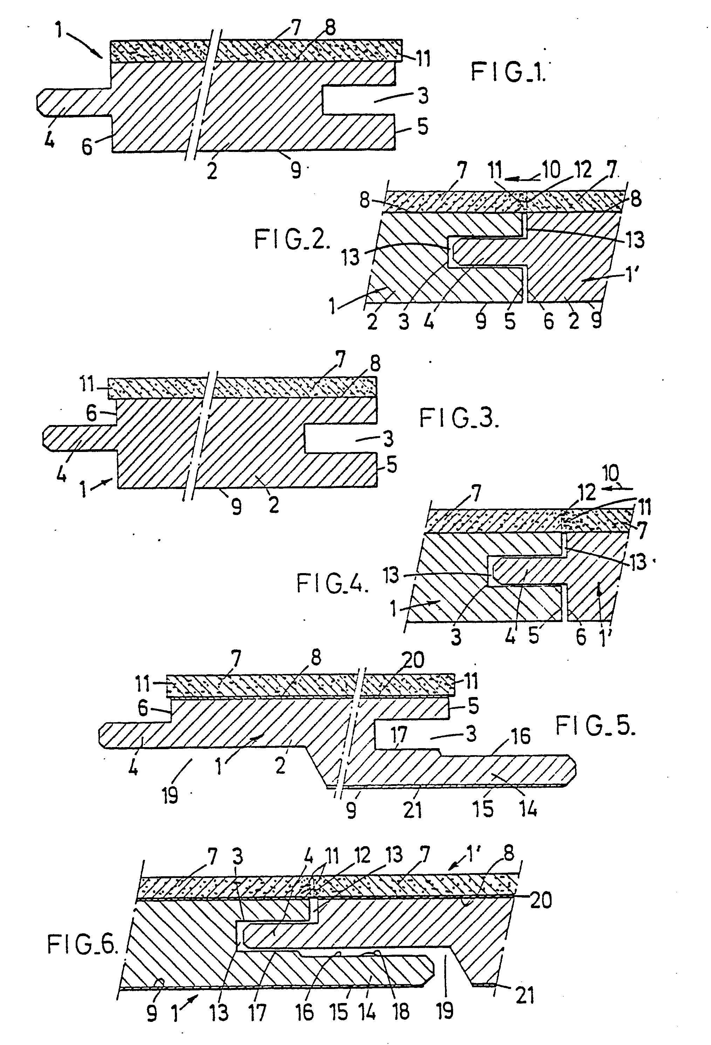

La couche de revêtement 7 peut soit, comme montré aux figures 1 et 2, faire saillie par rapport au support 2 uniquement le long du bord 5 de celui-ci, soit comme montré aux figures 3 et 4, faire saillie uniquement le long du bord 6 du support 2, ou encore, comme montré aux figures 5 et 6, faire saillie de part et d'autre de la face 8 du support 2, le long des bords 5 et 6 de celui-ci.

Dans les diverses formes de réalisation du panneau illustrées, les dimensions de la rainure 3 et de la languette 4 du support 2, prises perpendiculairement aux bords 5 et 6, sont sensiblement égales. La dimension correspondante de la partie en saillie 11 du revêtement 7, dans le cas d'une saillie unique (figures 1 à 4) est, à l'état non comprimé, au moins égale à 1 mm, tandis que cette dimension, en cas de saillie double (figures 5 et 6) est, toujours à l'état non comprimé, au moins égale à 0,5 mm. Après assemblage des panneaux 1 et 1', et après compression des parties en saillie 11, pour fermer le joint 12, il subsiste, entre les bords 5 et 6 du support et entre la languette 4 et le fond de la rainure 3, des espaces 13 permettant la dilatation des supports 2 des panneaux.

Dans la forme de réalisation illustrée aux figures 5 et 6, les dimensions des parties 11 en saillie, prises perpendiculairement aux bords 5 et 6 susdits, sont sensiblement égales. Le support 2 comprend, le long de son bord 5 présentant la rainure 3, une patte 14 disposée en saillie et destinée à simplifier la fixation, par clouage ou agrafage des panneaux 1. La face 15 de cette patte 14 est située dans le prolongement de la face 9 du support 2, tandis que son autre face 16 est avantageusement en retrait par rapport à la face 17 de la rainure 3, de sorte que la tête des clous ou les agrafes 18 fixant le panneau 1 ne gêne pas l'introduction de la languette 4 du panneau 1' dans la rainure 3 du panneau 1. Pour permettre l'assemblage des panneaux, ceux-ci présentent, le long de leur bord 6, un évidement 19 correspondant à la patte de fixation 14.

Le support 2 des panneaux 1 est avantageusement de forte densité et fabriqué à sec à base de fibres de bois. Il est en outre imprégné de résines et de matières hydrofuges. La couche de revêtement décorative 7, collée sur le support 2, est avantageusement réalisée en chlorure de polyvinyle expansé et son épaisseur est de l'ordre du quart de l'épaisseur du support 2.

Pour permettre de séparer facilement du support 2 la couche de revêtement 7, afin de la remplacer par un autre revêtement, une couche de matière non tissée 20 (figures 5 et 6) est intercalée entre la face 8 du support 2 et la couche de revêtement 7. Pour assurer l'équilibrage du panneau et neutraliser toutes les distorsions, une couche de matière 21, de même nature que celle qui constitue la couche de revêtement 7, est collée sur toute la surface de la face 9 du panneau (figures 5 et 6).

On pourrait également prévoir de recouvrir soit la face 9 du panneau, soit la couche de matière 21, d'une feuille de matière isolante et/ou réfléchissante, telle que feuille d'aluminium.

La couche de revêtement décorative 7 a sa surface apparente 22 qui imite un tissu dont les fils de chaîne sont sensiblement parallèles aux bords 5 et 6 des panneaux.

C'est ainsi que l'on pourrait notamment prévoir des panneaux présentant une rainure le long de deux bords contigus et une languette le long des deux autres bords contigus, le revêtement 7 étant disposé en saillie soit le long des deux bords contigus susdits présentant les rainures ou présentant les languettes, soit le long des quatre bords du panneau.

## Revendications

1. Panneau décoratif (1), pour assemblage à plat joint à rainure et languette, constitué d'un support rigide (2) présentant au moins une rainure (3) et au moins une languette (4), ménagées le long de deux bords parallèles (5, 6) du support (2), et d'une couche de revêtement décorative (7) associée à une des deux grandes faces (8 ; 9) dudit support de manière à couvrir la totalité de la surface de cette face (8 ; 9), caractérisé en ce que la couche de revêtement décorative (7) est réalisée en matériau déformable par compression et fait saillie le long d'au moins un des deux bords (5, 6) parallèles du support (2) d'une dimension constante, les rainure (3) et languette (4) de ce dernier étant agencées pour permettre, lors de l'assemblage de deux panneaux (1, 1'), la compression de la partie (11) de la couche de revêtement décoratif (7) disposée en saillie afin de fermer le joint (12) entre ces deux panneaux (1, 1').

2. Panneau suivant la revendication 1, caractérisé en ce que la couche de revêtement décoratif (7) fait saillie, par rapport à la face susdite (8) du support (2), le long des deux bords parallèles (5, 6) de celui-ci.

3. Panneau suivant la revendication 2, caractérisé en ce que les dimensions des parties de la couche de revêtement (7) en saillie, prises perpendiculairement aux bords parallèles (5, 6), sont sensiblement égales.

4. Panneau suivant la revendication 1, caractérisé en ce que les dimensions de la rainure (3) et de la languette (4) prises perpendiculairement aux bords parallèles (5, 6) précités sont sensiblement égales, la dimension correspondante de la partie (11) de la couche de revêtement (7) en saillie étant, à l'état non comprimé, au moins égale à 1 mm.

5. Panneau suivant l'une ou l'autre des revendications 2 et 3, caractérisé en ce que les dimensions de la rainure (3) et de la languette (4) prises perpendiculairement aux bords parallèles (5, 6) précités sont sensiblement égales, la dimension correspondante de chacune des parties (11) de la couche de revêtement (7) en saillie étant, à l'état non comprimé, au moins égale à 0,5 mm.

6. Panneau suivant l'une quelconque des revendications 1 à 5, caractérisé en ce que le support (2) comprend, le long de son bord (5) présentant la rainure (3), une patte de fixation (14) en saillie, cette patte ayant une de ses grandes faces située dans le prolongement de la face (9) du support (2) opposée à celle qui reçoit la couche de revêtement (7), la distance séparant cette face de la patte (14) de son autre face, qui lui est parallèle, étant tout au plus égale à la distance séparant la rainure (3) de ladite face (9) du support opposée à celle sur laquelle est appliquée la couche de revêtement (7), ledit support (2) présentant, le long de son bord (6) pourvu de la languette (4), un évidement (19) correspondant à la patte de fixation (14).

7. Panneau suivant l'une quelconque des revendications 1 à 6, caractérisé en ce que le support (2) est de forte densité, à base de fibres de bois et fabriqué à sec.

8. Panneau suivant la revendication 7, caractérisé en ce que le support (2) est imprégné de résines et de matières hydrofuges.

9. Panneau suivant l'une quelconque des revendications 1 à 8, caractérisé en ce que la couche de revêtement décorative (7) est réalisée en chlorure de polyvinyle expansé.

10. Panneau suivant la revendication 9, caractérisé en ce que l'épaisseur de la couche de revêtement (7) est de l'ordre du quart de l'épaisseur du support (2).

11. Panneau suivant l'une ou l'autre des revendications 9 et 10, caractérisé en ce qu'une couche de matière non tissée (20) est intercalée entre le support (2) et la couche de revêtement décorative (7).

12. Panneau suivant l'une quelconque des revendications 1 à 11, caractérisé en ce que la face (9) du support (2), opposée à la face (8) sur laquelle est appliquée la couche de revêtement décorative (7), est couverte d'une couche de matière (21) de même nature que celle qui constitue la couche de revêtement décorative.

13. Panneau suivant l'une quelconque des revendications 1 à 11, caractérisé en ce que la face (9) du support (2) opposée à la face (8) sur laquelle est appliquée la couche de revêtement décorative (7), est couverte d'une feuille de matière isolante et réfléchissante, telle que de l'aluminium.

14. Panneau suivant la revendication 12, caractérisé en ce que la couche de matière (21), de même nature que celle qui constitue la couche de revêtement décorative (7), est couverte d'une feuille d'aluminium.

15. Panneau suivant l'une quelconque des revendications 1 à 14, caractérisé en ce que la couche de revêtement décorative (7) a sa surface apparente qui imite un tissu dont les fils de chaîne sont sensiblement parallèles aux deux bords (5, 6) précités du support (2).

**Claims**

1. Decorative panel (1) for flat tongue-and-groove joint assembly, comprised of a rigid support (2) provided with at least one groove (3) and at least one tongue (4), formed along two parallel edges (5, 6) of the support (2), and of a decorative lining layer (7) associated with one of both large sides (8 ; 9) from said support, in such a way as to cover the complete surface area of said side (8 ; 9), characterized in that the decorative lining layer (7) is made from pressure-distortable material and projects along at least one of both parallel edges (5, 6) of the support (2) over a constant distance, the groove (3) and tongue (4) thereof being so arranged as to allow when assembling two panels (1, 1'), compressing that projecting portion (11) from the decorative lining layer (7) to close the joint (12) between both said panels (1, 1').

2. Panel according to claim 1, characterized in that the decorative lining layer (7) projects relative to said side (8) of the support (2), along both parallel edges (5, 6) thereof.

3. Panel according to claim 2, characterized in that the dimensions of the projecting portions from the lining layer (7), as considered at right angle to the parallel edges (5, 6), are substantially equal.

4. Panel according to claim 1, characterized in that the dimensions of the groove (3) and tongue (4) as considered at right angle to said parallel edges (5, 6), are substantially equal, the corresponding dimension of the projecting portion (11) from the lining layer (7) in uncompressed condition, being at least equal to 1 mm.

5. Panel according to either one of claims 2 and 3, characterized in that the dimensions of the groove (3) and tongue (4) as considered at right angle to said parallel edges (5, 6), are substantially equal, the corresponding dimension of each said projecting portions (11) from the lining layer (7) in uncompressed condition, being at least equal to 0.5 mm.

6. Panel according to any one of claims 1 to 5, characterized in that the support (2) comprises along the edge (5) thereof provided with the groove (3), a projecting fastening lug (14), said lug having the one large surface thereof lying in the extension of that side (9) of the support (2) opposite to that side receiving the lining layer (7), the spacing between said surface of the lug (14) and the other surface thereof in parallel relationship therewith, being at the most equal to the spacing between the groove (3) and said support side (9) opposite to the side the lining layer (7) is applied on, said support (2) being provided along that edge (6) thereof provided with the tongue (4), with a recess (19) corresponding to the fastening lug (14).

7. Panel according to any one of claims 1 to 6, characterized in that the support (2) has a high density, on the basis of wood fibers and is dry-manufactured.

8. Panel according to claim 7, characterized in that the support (2) is impregnated with resins and waterproofing materials.

9. Panel according to any one of claims 1 to 8, characterized in that the decorative lining layer (7) is made from expanded polyvinyl chloride.

10. Panel according to claim 9, characterized in that the thickness of the lining layer (7) is about one fourth the thickness of the support (2).

11. Panel according to either one of claims 9 and 10, characterized in that a non-woven material layer (20) is inserted between the support (2) and the decorative lining layer (7).

12. Panel according to any one of claims 1 to 11, characterized in that that side (9) of the support (2) opposite to the side (8) the decorative lining layer (7) is applied on, is covered with a layer (21) from a material of the same kind as that material the decorative lining layer is comprised of.

13. Panel according to any one of claims 1 to 11, characterized in that that side (9) of the support (2) opposite to the side (8) the decorative lining layer (7) is applied on, is covered with a sheet from insulating and reflective material, such as aluminum.

14. Panel according to claim 12, characterized in that the material layer (21) of the same kind as the material the decorative lining layer (7) is comprised of, is covered with an aluminum sheet.

15. Panel according to any one of claims 1 to 14, characterized in that the decorative lining layer (7) has a visible surface which imitates a fabric the warp threads of which substantially lie in parallel relationship with both said edges (5, 6) of the support (2).

## Patentansprüche

1. Dekoratives Paneel (1), das durch Spundung mit Nut und Feder zusammenfügbar und zusammengesetzt ist aus einem starren Träger (2), der wenigstens eine Nut (3) und eine Feder (4) aufweist, die entlang zweier paralleler Ränder (5, 6) des Trägers (2) ausgebildet sind, und einer dekorativen Überzugsschicht (7), die mit einer der beiden Hauptseiten (8, 9), des Trägers so verbunden ist, daß sie die gesamte Fläche dieser Hauptseite (8, 9) bedeckt, dadurch gekennzeichnet, daß die dekorative Überzugsschicht (7) aus einem durch Kompression verformbaren Material hergestellt ist und entlang wenigstens eines der beiden parallelen Ränder (5, 6) des Trägers (2) um einen konstanten Betrag übersteht, wobei die Nut (3) und die Feder (4) des Trägers so angeordnet sind, daß sie beim Zusammenfügen von zwei Paneelen (1, 1') das Zusammenpressen des hervortretenden Abschnitts (11) der dekorativen Überzugsschicht (7) ermöglichen, um die Trennfuge (12) zwischen diesen beiden Paneelen (1, 1') zu schließen.

2. Paneel nach Anspruch 1, dadurch gekennzeichnet, daß die dekorative Überzugsschicht (7) gegenüber der genannten Seite (8) des Trägers (2) entlang der beiden parallelen Ränder (5, 6) des Trägers übersteht.

3. Paneel nach Anspruch 2, dadurch gekennzeichnet, daß die Abmessungen der überstehenden Abschnitte der Überzugsschicht (7), rechtwinklig zu den parallelen Rändern (5, 6) gemessen, im wesentlichen gleich sind.

4. Paneel nach Anspruch 1, dadurch gekennzeichnet, daß die Abmessungen der Nut (3) und der Feder (4), gemessen rechtwinklig zu den vorgenannten parallelen Rändern (5, 6), im wesentlichen gleich sind, wobei die entsprechende Abmessung des überstehenden Abschnitts (11) der Überzugschicht (7) im nicht zusammengepreßten Zustand wenigstens 1 mm beträgt.

5. Paneel nach Anspruch 2 oder 3, dadurch gekennzeichnet, daß die Abmessungen der Nut (3) und der Feder (4), gemessen rechtwinklig zu den vorgenannten parallelen Rändern (5, 6), im wesentlichen gleich sind, wobei die entsprechende Abmessung jedes der überstehenden Abschnitte (11) der Überzugsschicht (7) im nicht zusammengepreßten Zustand wenigstens 0,5 mm beträgt.

6. Paneel nach einem der Ansprüche 1 bis 5, dadurch gekennzeichnet, daß der Träger (2) entlang seinem mit der Nut (3) versehenen Rand (5) eine überstehende Befestigungsklaue (14) aufweist, von deren Hauptseiten eine in der Verlängerung der Seite (9) des Trägers (2) angeordnet ist, die derjenigen, auf welche die Überzugsschicht (7) aufgetragen ist, abgewandt ist, wobei der Abstand zwischen dieser Seite der Klaue (14) und ihrer anderen, zu ihr parallelen Fläche höchstens gleich ist dem Abstand zwischen der Nut (3) und der genannten Seite (9) des Trägers, die derjenigen, auf welche die Überzugsschicht (7) aufgetragen ist, abgewandt ist, wobei der genannte Träger (2) entlang seinem mit der Feder (4) versehenen Rand (6) eine der Befestigungsklaue (14) entsprechende Ausnehmung aufweist.

7. Paneel nach einem der Ansprüche 1 bis 6, dadurch gekennzeichnet, daß der Träger (2) von großer Dichte ist, auf der Basis von Holzfasern und in einem Trockenverfahren hergestellt ist.

8. Paneel nach Anspruch 7, dadurch gekennzeichnet, daß der Träger (2) mit Harzen und wasserabweisenden Stoffen getränkt ist.

9. Paneel nach einem der Ansprüche 1 bis 8, dadurch gekennzeichnet, daß die dekorative Überzugsschicht (7) aus geschäumtem Polyvinylchlorid hergestellt ist.

10. Paneel nach Anspruch 9, dadurch gekennzeichnet, daß die Dicke der Überzugsschicht (7) etwa ein Viertel der Dicke des Trägers (2) beträgt.

11. Paneel nach Anspruch 9 oder 10, dadurch gekennzeichnet, daß zwischen dem Träger (2) und der dekorativen Überzugsschicht (7) eine Vliesstoffschicht (20) angeordnet ist.

12. Paneel nach einem der Ansprüche 1 bis 11, dadurch gekennzeichnet, daß die Seite (9) des Trägers (2), die der Seite (8), auf welche die dekorative Überzugsschicht (7) aufgetragen ist, abgewandt ist, mit einer Schicht aus einem Werkstoff (21) derselben Art wie die dekorative Überzugschicht überzogen ist.

13. Paneel nach einem der Ansprüche 1 bis 11, dadurch gekennzeichnet, daß die Seite (9) des Trägers (2), die der Seite (8), auf welche die dekorative Überzugsschicht (7) aufgetragen ist, abgewandt ist, mit einer Folie aus einem isolierenden und reflektierenden Werkstoff, z. B. Aluminium, überzogen ist.

14. Paneel nach Anspruch 12, dadurch gekennzeichnet, daß die Schicht aus dem Werkstoff (21) derselben Art wie die dekorative Überzugsschicht (7) mit einer Aluminiumfolie überzogen ist.

15. Paneel nach einem der Ansprüche 1 bis 14, dadurch gekennzeichnet, daß die dekorative Überzugsschicht (7) mit sichtbarer Oberfläche angeordnet ist, die ein Gewebe imitiert, dessen Kettfäden zumindest annähernd parallel zu den beiden genannten Rändern (5, 6) des Trägers (2) sind.

FIG.1.

FIG.2.

FIG.3.

FIG.4.

FIG.5.

FIG.6.